# EUROPÄISCHE PATENTANMELDUNG

(11) **EP 3 754 312 A1**
(43) Veröffentlichungstag der Anmeldung: **23.12.2020**
(21) Anmeldenummer: 20000210.3
(22) Anmeldetag: 08.06.2020
(51) Int. Cl.: G01H 1/00, G01H 1/14, G01H 1/16

(54) **VERFAHREN ZUR ÜBERWACHUNG DES BETRIEBSZUSTANDES VON WENIGSTENS EINER BEWEGBAREN KOMPONENTE VON AGGREGATEN VON MASCHINEN**

(30) Priorität: 19.06.2019 DE 102019004404
(71) Anmelder: Stöber Antriebstechnik GmbH & Co. KG, 75177 Pforzheim (DE)
(72) Erfinder: Kraus, Benjamin, 75249 Kieselbronn (DE); Hirschmann, Julian, 75045 Walzbachtal (DE)
(74) Vertreter: Kohl, Karl-Heinz

(57) **Zusammenfassung**

Das Verfahren dient der selbsttätigen Überwachung des Betriebszustandes wenigstens einer bewegbaren Komponente von Aggregaten (1) von Maschinen, bei denen die Komponente in einer Umkleidung (3) untergebracht ist und von der Komponente ein Ist-Ordnungsspektrum (21) erfasst wird, das mit einem Referenz-Ordnungsspektrum verglichen wird. An der Umkleidung (3) ist wenigstens ein Vibrationssensor (2) so angebracht, dass er die durch die bewegte Komponente erzeugten Schwingungen der Umkleidung (3) erfasst und diese Schwingungen kennzeichnende Sensorsignale einer Auswerteeinheit (18) zuführt. Sie erzeugt aus den Sensorsignalen jeweils ein Ist-Ordnungsspektrum (21) und vergleicht es mit dem Referenz-Ordnungsspektrum. Bei Erreichen und/oder Überschreiten eines Grenzwertes wird ein Signal erzeugt.

## Beschreibung

Die Erfindung betrifft ein Verfahren zur Überwachung des Betriebszustandes von wenigstens einer bewegbaren Komponente von Aggregaten von Maschinen und dergleichen nach dem Oberbegriff des Anspruches 1.

Um den Zustand von Komponenten eines Aggregates festzustellen, werden in der Regel Beschleunigungssignale erfasst, aus denen durch eine Fouriertransformation ein Frequenzspektrum errechnet wird. Der Benutzer des Aggregates muss anhand dieses Frequenzspektrums abschätzen, wie der Zustand der überwachten Komponente des Aggregates ist. Hierbei kommt es häufig zu Fehleinschätzungen, zumal nicht immer zuverlässig zu beurteilen ist, ob die überwachte Komponente noch einen ordnungsgemäßen Betrieb zulässt.

Der Erfindung liegt die Aufgabe zugrunde, das gattungsgemäße Verfahren so auszubilden, dass der Zustand des Aggregates selbsttätig überwacht werden kann.

Diese Aufgabe wird beim gattungsgemäßen Verfahren erfindungsgemäß mit den kennzeichnenden Merkmalen des Anspruches 1 gelöst.

Das erfindungsgemäße Verfahren zeichnet sich dadurch aus, dass der Benutzer des Aggregates selbst keine Bewertung vornehmen muss, um den Zustand der überwachten Komponente festzustellen. Mit dem Vibrationssensor werden die Schwingungen erfasst, die durch die bewegte Komponente an der Umkleidung ausgelöst werden. Der Vibrationssensor erzeugt entsprechend den aufgenommenen Schwingungen der Umkleidung Sensorsignale, die der Auswerteeinheit zugeführt werden. Sie erzeugt aus den Sensorsignalen ein Ist-Ordnungsspektrum, das mit dem Referenz-Ordnungsspektrum verglichen wird. Sobald die Auswerteeinheit feststellt, dass ein Grenzwert erreicht und/oder überschritten ist, erzeugt sie ein Signal, das den Benutzer des Aggregates darauf hinweist, dass die überwachte Komponente des Aggregates sich einem kritischen Zustand nähert oder bereits erreicht hat. Da eine Bewertung durch den Benutzer nicht mehr erforderlich ist, lässt sich der Zustand der überwachten Komponente zuverlässig erfassen und feststellen.

Vorteilhaft ist es insbesondere, wenn die Auswerteeinheit aus den Ist-Ordnungsspektren ein Trendspektrum erzeugt, das den voraussichtlichen Verlauf des Betriebszustandes der überwachten Komponente über die Zeit angibt. Dadurch kann sich der Benutzer des Aggregates darauf einstellen, wann er mit einem kritischen Zustand der Komponente zu rechnen hat. Er kann daher frühzeitig Vorkehrungen treffen, um die überwachte Komponente beispielsweise rechtzeitig auszutauschen, um eine Beschädigung weiterer Bestandteile des Aggregates zu vermeiden.

Vorteilhaft wird das Trendspektrum für jede Ordnung des Ordnungsspektrums erzeugt, so dass eine zuverlässige Voraussage des voraussichtlichen Betriebszustandes der überwachten Komponente gewährleistet ist.

Zur Erzeugung des Referenz-Ordnungsspektrums werden in vorteilhafter Ausbildung des Verfahrens mehrere Messungen mit dem Vibrationssensor durchgeführt, wobei die zu überwachende Komponente sich im Neuzustand befindet. Bei diesen Messungen werden maximale Beschleunigungsamplituden der zu überwachenden charakteristischen Ordnung der zu überwachenden Komponente erfasst und die Beschleunigungsamplitude der mehreren Messungen gemittelt. Auf diese Weise können zuverlässige Referenzwerte ermittelt werden, die mit den entsprechenden Ist-Werten während des Betriebes des Aggregates verglichen werden.

Der Vibrationssensor wird bei einer vorteilhaften Ausführungsform winkelsynchron zu einem Winkelmesssystem, beispielsweise einem Encoder, betrieben. Die winkelsynchrone Abtastung hat den Vorteil, dass die bewegbare Komponente beliebige Bewegungsprofile ausführen kann.

Da in vielen Fällen eine winkelsynchrone Abtastung nicht möglich ist, werden Winkel- und Beschleunigungssignale mittels beider Sensoren zeitsynchron abgetastet. Anschließend wird das Beschleunigungssignal in Abhängigkeit des Winkelsignales nachabgetastet. Durch dieses Resampling entsteht eine Winkelsynchronizität.

Wenn die zu überwachende Komponente eine gleichförmige Bewegung, beispielsweise eine konstante Geschwindigkeit, ausführt, kann der Vibrationssensor auch zeitsynchron betrieben werden.

Die Datenerfassung und Berechnung der Ordnungsspektren kann während der Einsatzdauer des Aggregates zyklisch vorgenommen werden. Die Zyklen richten sich danach, in welchen Zeiträumen mit einem Verschleiß der zu überwachenden Komponente üblicherweise zu rechnen ist.

Die Datenerfassung und Berechnung der Ordnungsspektren kann aber auch trigger-basiert vorgenommen werden.

Das Referenz-Ordnungsspektrum wird vorteilhaft in einem nichtflüchtigen Speicher abgelegt. Er kann beispielsweise in der Auswerteeinheit vorgesehen sein. Als nichtflüchtiger Speicher kann aber auch beispielhaft ein Transponder verwendet werden, der beispielsweise Bestandteil des Typenschildes des Aggregates ist.

Der Anmeldungsgegenstand ergibt sich nicht nur aus dem Gegenstand der einzelnen Patentansprüche, sondern auch durch alle in den Zeichnungen und der Beschreibung offenbarten Angaben und Merkmale. Sie werden, auch wenn sie nicht Gegenstand der Ansprüche sind, als erfindungswesentlich beansprucht, soweit sie einzeln oder in Kombination gegenüber dem Stand der Technik neu sind.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen
- Fig. 1: die Darstellung des Funktionsprinzips des erfindungsgemäßen Verfahrens,
- Fig. 2: in schematischer Darstellung einen Teil eines Getriebemotors, an dessen Gehäuse ein Vibrationssensor angeordnet ist,
- Fig. 3: zwei Ordnungsspektren von Wälzlagern und Verzahnung des Getriebemotors im Neuzustand sowie im beschädigten Zustand,
- Fig. 4: in schematischer Darstellung die Erzeugung eines Referenz-Ordnungsspektrums aus mehreren Messungen und Ablage des Referenz-Ordnungsspektrums in einem Speicher,
- Fig. 5: den Zusammenhang zwischen der Vibrationsmessung und der Größe des Schadensfalles von Wälzlagern und Verzahnung des Getriebemotors.

Der Zustand eines Getriebemotors 1 wird mittels wenigstens eines Vibrationssensors 2 erfasst. Solche Vibrationssensoren 2 sind bekannt und werden darum nicht mehr erläutert.

Der Getriebemotor 1 hat als Umkleidung ein Gehäuse 3, in dem ein Getriebe 4 und ein Motor 5 untergebracht sind.

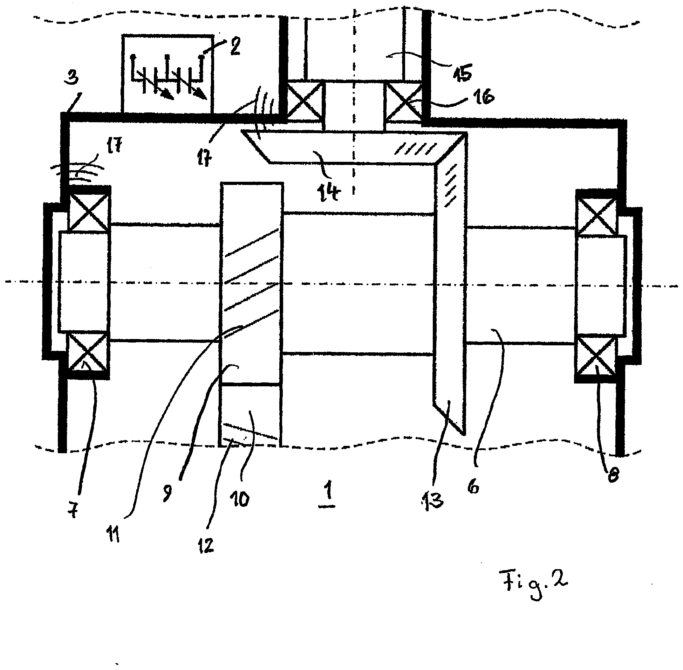

In Fig. 2 ist beispielhaft ein Teil eines solchen Getriebemotors 1 dargestellt. Er hat eine Welle 6, deren beide Enden über jeweils ein Lager 7, 8 im Gehäuse 3 drehbar gelagert sind. Auf der Welle 6 sitzt drehfest ein Stirnrad 9, das mit einem Stirnrad 10 kämmt. Die beiden Stirnräder 9, 10 haben bespielhaft eine Schrägverzahnung 11, 12, können aber auch eine Geradverzahnung aufweisen. Im Bereich zwischen den beiden Lagern 7, 8 sitzt auf der Welle 6 drehfest ein Kegelrad 13, das mit einem Kegelrad 14 in Eingriff ist, das drehfest auf einer Welle 15 sitzt, die senkrecht zur Welle 6 angeordnet ist. Die Welle 15 ist durch Lager 16, von denen in Fig. 2 nur ein Lager dargestellt ist, im Gehäuse 3 drehbar gelagert.

Der Vibrationssensor 2 ist an der Außenseite des Gehäuses 3 angebracht und befindet sich in einem Gehäusebereich, der bei Betrieb des Getriebemotors in Schwingungen gerät. In Fig. 2 sind diese Schwingungen 17 entsprechend kenntlich gemacht. Die Schwingungen 17 treten beispielhaft im Bereich der Lager 7, 16 auf, mit denen die Wellen 6, 15 drehbar im Gehäuse abgestützt und gelagert sind. Die Schwingungen/Körperschall werden von den Lagern 7, 8 an das Gehäuse 3 übertragen. Die Schwingungsursache können beispielsweise auch Verzahnungsschwingungen sein, die über die Wälzlager 7, 8 an das Gehäuse 3 übertragen werden.

Der Vibrationssensor 2 ist an eine Auswerteelektronik 18 geschlossen.

Auf einer der Wellen 6, 15 kann ein Winkelmesssystem 19, z. B. der für den Betrieb des Getriebemotors 1 eingesetzte Encoder, an die Auswerteelektronik 18 angeschlossen werden. Ein solcher Encoder kann ein Singleturn- oder ein Multiturn-Geber sein.

Der Auswerteelektronik 18 werden die Signale des Vibrationssensors 2 und ggfs. des Winkelmesssystems 19 zugeführt, welche diese Signale auswertet und entsprechende Informationen an den Benutzer des Getriebemotors 1 liefert.

Der Vibrationssensor 2 wird zum Überwachen des Zustandes des Getriebemotors 1 herangezogen. Der Vibrationssensor 2 kann winkelsynchron zum Signal des Winkelmesssystems 19 oder zeitsynchron abgetastet werden. Bei der winkelsynchronen Betriebsweise des Vibrationssensors 2 werden die Signale des Vibrationssensors 2 in Abhängigkeit von der jeweiligen Winkelposition durch das Winkelmesssystem 19 erfasst und der Auswerteelektronik 18 zugeführt. Da die Abtastung winkelsynchron erfolgt, können beliebige Bewegungsabläufe der Welle 6, 15 erfasst werden. Bei einer zeitsynchronen Abtastung, die auch möglich ist, wird der Zustand des Getriebemotors durch den Vibrationssensor 2 zeitabhängig erfasst, so dass der Zustand des Getriebemotors 1 nur bei einer konstanten Geschwindigkeit ermittelt werden kann. Welche Art von Abtastung durch den Vibrationssensor 2 erfolgt, hängt u. a. von der Art des zu überwachenden Getriebemotors, seinem Aufstellort und dergleichen ab.

Der Zustand der Zahnräder 9, 10, 13, 14 und der Lager 7, 8, 16 des Getriebemotors wird zyklisch überwacht und bewertet. Für die Zustandsbewertung dieser Getriebeteile werden typische Bereiche des Ordnungsspektrums beobachtet. Das nachfolgend beschriebene Verfahren ermöglicht eine Schadensdiagnose des Getriebemotors 1 mit einem beliebigen Bewegungsprofil. Hier wird davon ausgegangen, dass für die Schadensdiagnose immer der gleiche Bewegungsablauf zur Trendkurvenbildung vorhanden ist, so dass Störungen im Bewegungsablauf mit dem Verfahren frühzeitig und zuverlässig erfasst werden können.

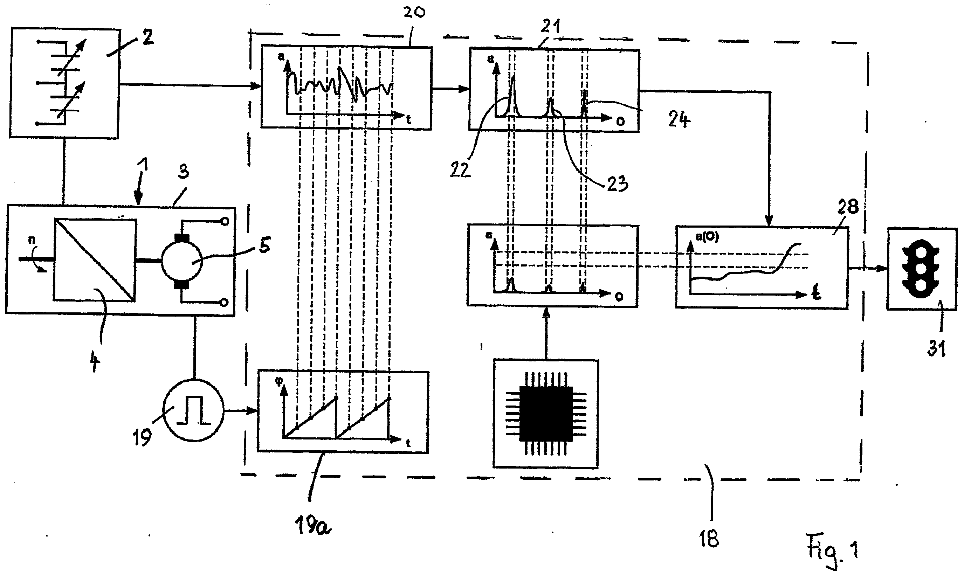

Der Vibrationssensor 2 erfasst die Schwingungen 17 des Gehäuses 3 und erzeugt ein entsprechendes Beschleunigungssignal. In Fig. 1 ist das entsprechende Beschleunigungs-Zeit-Diagramm 20 dargestellt. Ist ein Winkelmesssystem 19 vorhanden, dann können die Beschleunigungssignale durch Resampling in Korrelation zur Drehlage der jeweiligen Welle 6, 15 (Winkel-Zeit-Diagramm 19a) gesetzt werden, wie in Fig. 1 durch die gestrichelten senkrechten Linien veranschaulicht ist.

Aus dem Beschleunigungs-Zeit-Diagramm 20 und ggfs. des Winkel-Zeit-Diagramms 19a wird in bekannter Weise das Ordnungsspektrum 21 erzeugt, in dem die Beschleunigung a gegen die Ordnung o aufgetragen ist. In diesem Ordnungsspektrum 21 zeigen sich in Abhängigkeit vom zu überwachenden Getriebemotor 1 ausgeprägte Ordnungen, die beispielhaft als erste Ordnung 22, vierte Ordnung 23 und achte Ordnung 24 angenommen werden. So kann die erste Ordnung 22 beispielhaft dem Wälzlager 7 (Fig. 2), die Ordnung 23 den miteinander kämmenden Zahnrädern 9, 10 und die Ordnung 24 dem Lager 16 zugeordnet sein.

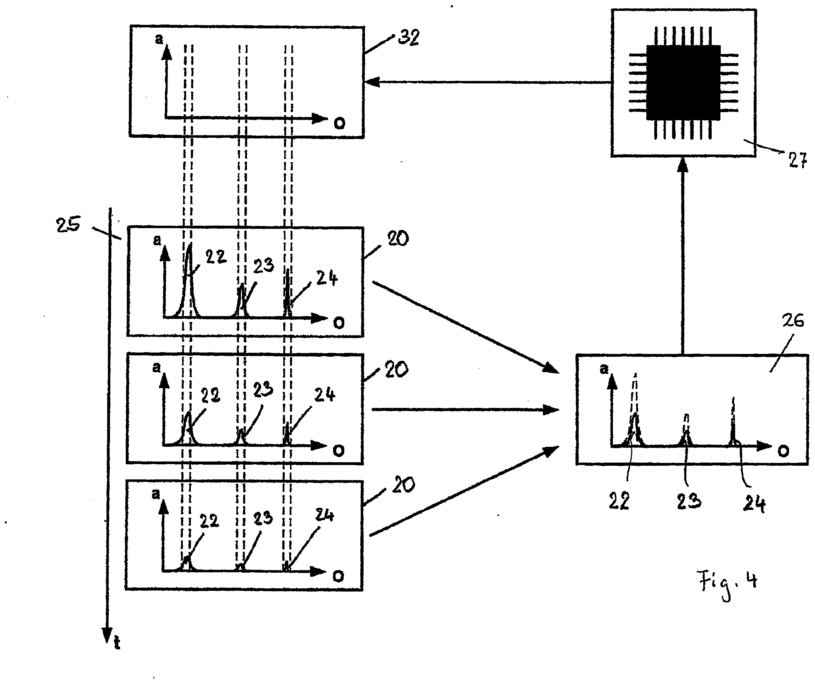

Um einen ordnungsgemäßen Zustand des Getriebemotors beurteilen zu können, wird zunächst ein Ordnungsspektrum des Getriebemotors im Neuzustand erzeugt. Es werden hierfür, wie anhand von Fig. 4 erläutert wird, mehrere Messungen 25 mit Hilfe des Vibrationssensors 2 durchgeführt. Die Messungen werden immer unter den gleichen Betriebszuständen vorgenommen, d.h. die gleichen Drehzahlen bzw. die gleichen Bewegungsprofile. Die Veränderungen in den Spektren ergeben sich aus Glättungen der mechanischen Teile und aus messtechnischen Schwankungen. Diese Messungen werden durchgeführt, weil sich die Schwingungen eines Getriebemotors auch schon im "Gut-Zustand" verändern. Dies wird durch die mehreren Messungen bei der Referenzwertmessung berücksichtigt. In Fig. 4 sind für drei Messungen beispielhaft drei Beschleunigungs-Ordnungs- Diagramme 20 angegeben, die sich bei gleichen Geschwindigkeiten des Getriebemotors 1 ergeben. In den Diagrammen 20 sind beispielhaft jeweils drei Ordnungen 22 bis 24 dargestellt. Aus diesen drei Diagrammen 20 wird durch Mittelung der Amplituden der drei Ordnungen 22 bis 24 das Referenz-Ordnungsspektrum 26 mit den gemittelten Amplituden der Ordnungen 22 bis 24 erzeugt. Das Referenz-Ordnungsspektrum 26 wird in einem Speicher 27 hinterlegt, der ein nichtflüchtiger Speicher ist und Bestandteil der Auswerteelektronik 18 ist.

Anhand des im Speicher 27 abgelegten Referenz-Ordnungsspektrums 26 kann beim Einsatz des Getriebemotors 1 der Verschleißzustand der entsprechenden Komponenten, im Ausführungsbeispiel der Lager 7, 16 und der Zahnräder 9, 10, 13, 14, erfasst und überwacht werden. Mit dem Vibrationssensor 2 werden zeitsynchron Messungen vorgenommen. Die Sensorsignale werden der Auswerteelektronik 18 zugeführt, die aus den Sensorsignalen das aktuelle Ordnungsspektrum (Ist-Ordnungsspektrum) berechnet und mit dem im Speicher 27 hinterlegten Referenz-Ordnungsspektrum 26 vergleicht.

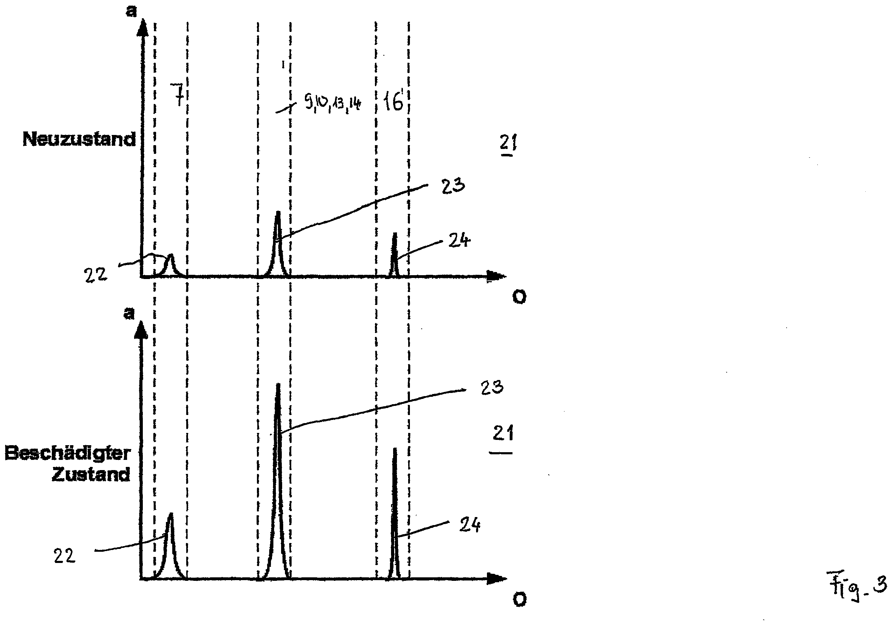

In Fig. 3 ist beispielhaft dargestellt, wie das Ordnungsspektrum 21 aussieht, wenn sich die überwachten Teile des Getriebemotors im beschädigten Zustand befinden. Das obere Ordnungsspektrum in Fig. 3 kennzeichnet den Neuzustand des Getriebemotors 1. Ein Vergleich mit dem unteren Ordnungsspektrum 21, das den beschädigten Zustand des Getriebemotors 1 darstellt, zeigen die doch deutlichen Unterschiede zwischen den überwachten Ordnungen 22 bis 24, wenn die überwachten Getriebemotor-Komponenten beschädigt sind.

Während des Betriebes des Getriebemotors 1 wird der Vibrationssensor 2 zyklisch oder trigger-basiert aktiviert, wobei er die Schwingungen des Gehäuses 3 erfasst und die entsprechenden Signale an die Auswerteelektronik 18 liefert. Sie berechnet anhand der übermittelten Sensorsignale das jeweils aktuelle Ordnungsspektrum 21 und vergleicht es mit dem Referenz-Ordnungsspektrum 26.

Anhand der erfassten Ordnungs-Spektren 21 berechnet die Auswerteelektronik 18 für jedes Ordnungs-Spektrum 21 jeweils eine Trendkurve 28 (Fig. 1). In Fig. 1 ist der Übersichtlichkeit wegen nur eine Trendkurve 28 dargestellt. Sie zeigt den zu erwartenden Verschleiß der überwachten Getriebemotor-Komponenten über die Zeit an. Die Trendkurve 28 zeigt die Beschleunigung a der jeweiligen Ordnung 22 bis 24 über die Zeit t an. Der Benutzer des Getriebemotors 1 erhält dadurch eine ungefähre Aussage darüber, wann er mit Problemen infolge eines Verschleißes der überwachten Komponenten zu rechnen hat. Die Trendkurve 28 wird für jede der überwachten Ordnungen 22 bis 24 erzeugt, so dass für jede dieser Komponenten eine Trendkurve vorhanden ist. Grundsätzlich ist es möglich, dass die Trendkurven dem Benutzer zur Verfügung gestellt werden, so dass er abschätzen kann, wann erste Verschleißprobleme am Getriebemotor 1 auftreten können.

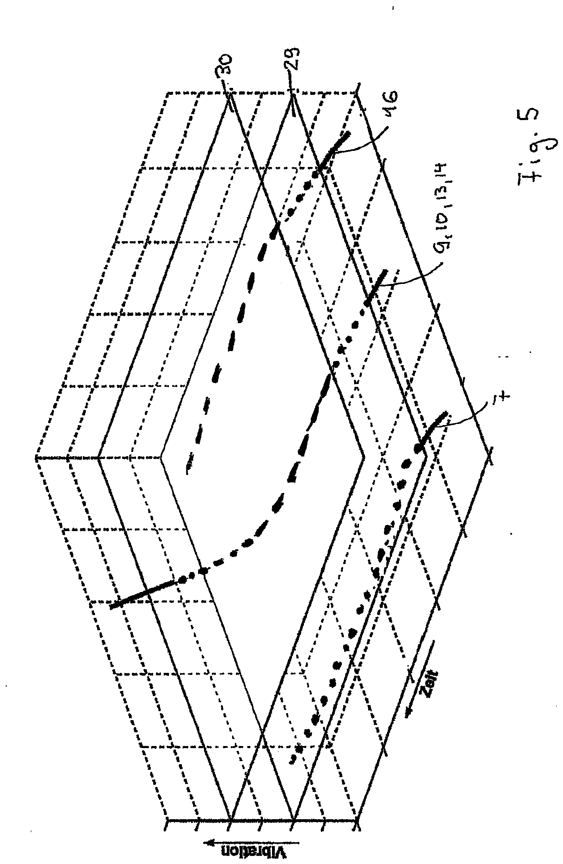

Fig. 5 zeigt schematisch und beispielhaft für die Lager 7, 16 und die Zahnräder 9, 10, 13, 14 den zu erwartenden Verlauf des Verschleißes über die Zeit. Erkennbar ist, dass beim dargestellten Ausführungsbeispiel der Verschleiß der Lager 7, 16 geringer ist als der Verschleiß der Zahnräder 9, 10, 13, 14. Dementsprechend wird eine Beschädigung eines oder mehrerer dieser Zahnräder 9, 10, 13, 14 früher auftreten als eine Beschädigung der Lager 7, 16.

Der Verschleiß dieser Komponenten des Getriebemotors 1 führt dazu, dass die Vibrationen des Gehäuse 3, die durch den Vibrationssensor erfasst werden, mit der Zeit zunehmen. Die Auswerteelektronik 18 ist beispielhaft so ausgebildet, dass sie zunächst ein Warnsignal 29 (Fig. 5), das von einer Anzeige 31 (Fig. 1), wie eine Ampel, ausgegeben wird, erzeugt, wenn die Werte der jeweiligen Ordnung einen ersten unteren Grenzwert erreichen. Aufgrund der entsprechenden Zustandsmeldung 29 wird der Benutzer darauf hingewiesen, dass mit einem Verschleiß der entsprechenden Komponente zu rechnen ist, so dass er frühzeitig Maßnahmen hiergegen ergreifen kann.

Ein zweites Warnsignal 30, das ebenfalls von der Anzeige 31 oder einer zusätzlichen Anzeige ausgegeben wird, wird dann erzeugt, wenn die jeweilige Komponente einen solchen Verschleißzustand erreicht hat, dass eine weitere Verwendung dieser Komponente nicht mehr sinnvoll ist. Dieser obere Grenzwert 30 wird vorteilhaft so gelegt, dass für den Benutzer des Getriebemotors 1 noch eine gewisse Reservezeit verbleibt, bevor diese Komponente tatsächlich nicht mehr brauchbar ist. Die Länge dieser Reservezeit kann aufgrund von Erfahrungswerten festgelegt werden. Die Anzeige 31 des Zustandes der überwachten Komponenten des Getriebemotors 1 kann optisch und/oder akustisch erfolgen. Es besteht darüber hinaus auch die Möglichkeit, den Getriebemotor 1 dann abzuschalten, wenn der Grenzwert 30 für das Vibrationssignal erreicht ist.

Beim beschriebenen Ausführungsbeispiel kann das jeweilige Zustandssignal drei Zustände annehmen, nämlich den Normalbetrieb, die Warnung und den Defekt. Für die Bestimmung des jeweiligen Zustandes ist neben der Amplitude der Trendkurve 28 auch deren zeitlicher Verlauf von Bedeutung. Insbesondere die Warnsignale 29 und 30 werden nur dann erzeugt, wenn die Trendkurve 28 den jeweiligen Grenzwert 29, 30 für eine definierte Zeit überschreitet. Dadurch wird verhindert, dass ein Warnsignal bereits durch kurzzeitige Überschreitungen der jeweiligen Grenzwerte 29, 30 erzeugt wird.

Mit dem beschriebenen Verfahren werden die zu beobachtenden Bereiche 32 (Fig. 4) des Ordnungsspektrums 21 automatisiert in Abhängigkeit vom eingesetzten Getriebemotor 1 berechnet. Die erforderlichen Parameter sind beispielsweise auf dem elektronischen Typenschild des Getriebemotors 1 abgelegt, beispielsweise in Form eines Transponders. Die Parameter können auch in der Auswerteelektronik 18 im dort befindlichen nichtflüchtigen Speicher 27 abgelegt sein. Mit dem Vibrationssensor 2 wird eine vollautomatisierte Vibrationsanalyse am Getriebemotor 1 durchgeführt.

Das Verfahren ist anhand eines Getriebemotors beispielhaft erläutert worden. Dieses Verfahren kann aber auch allgemein für Bearbeitungsmaschinen eingesetzt werden. Auch kann das Verfahren beispielsweise bei Linearantrieben verwendet werden, bei denen keine drehenden, sondern lineare Bewegungen auftreten.

## Patentansprüche

1. Verfahren zur Überwachung des Betriebszustandes wenigstens einer bewegbaren Komponente von Aggregaten von Maschinen und dergleichen, bei denen die Komponente in einer Umkleidung untergebracht ist und von der Komponente ein Ist-Ordnungsspektrum erfasst wird, das mit einem Referenz-Ordnungsspektrum verglichen wird,
**dadurch gekennzeichnet, dass** wenigstens ein Vibrationssensor (2) an der Umkleidung (3) so angebracht wird, dass er die durch die bewegte Komponente (7, 16; 9, 10, 13, 14) erzeugten Schwingungen der Umkleidung (3) erfasst und diese Schwingungen kennzeichnende Sensorsignale einer Auswerteeinheit (18) zuführt, die aus den Sensorsignalen jeweils ein Ist-Ordnungsspektrum (21) erzeugt und mit dem Referenz-Ordnungsspektrum (26) vergleicht, wobei bei Erreichen und/oder Überschreiten eines Grenzwertes ein Signal erzeugt wird.

2. Verfahren nach Anspruch 1,
**dadurch gekennzeichnet, dass** die Auswerteeinheit (18) aus den Ist-Ordnungsspektren (21) ein Trendspektrum (28) erzeugt, das den voraussichtlichen Verlauf des Betriebszustandes der Komponente (7, 16; 9, 10, 13, 14) über die Zeit (t) angibt.

3. Verfahren nach Anspruch 1 oder 2,
**dadurch gekennzeichnet, dass** das Trendspektrum (28) für jede Ordnung (22 bis 24) des Ordnungsspektrums (21) erzeugt wird.

4. Verfahren nach einem der Ansprüche 1 bis 3,
**dadurch gekennzeichnet, dass** zur Erzeugung des Referenz-Ordnungsspektrums (26) an der im Neuzustand befindlichen Komponente (7, 16; 9, 10, 13, 14) mehrere Messungen (25) mit dem Vibrationssensor (2) durchgeführt werden, wobei maximale Beschleunigungsamplituden der Ordnung der Komponente (7, 16; 9, 10, 13, 14) erfasst und die Beschleunigungsamplituden der mehreren Messungen (25) gemittelt werden.

5. Verfahren nach einem der Ansprüche 1 bis 4,
**dadurch gekennzeichnet, dass** der Vibrationssensor (2) winkelsynchron zu einem Winkelmesssystem (19) betrieben wird.

6. Verfahren nach einem der Ansprüche 1 bis 4,
**dadurch gekennzeichnet, dass** der Vibrationssensor (2) zeitsynchron betrieben wird.

7. Verfahren nach einem der Ansprüche 1 bis 6,
**dadurch gekennzeichnet, dass** die Datenerfassung und Berechnung der Ordnungsspektren (21) zyklisch vorgenommen wird.

8. Verfahren nach einem der Ansprüche 1 bis 6,
**dadurch gekennzeichnet, dass** die Datenerfassung und Berechnung der Ordnungsspektren (21) trigger-basiert vorgenommen wird.

9. Verfahren nach einem der Ansprüche 1 bis 8,
**dadurch gekennzeichnet, dass** das Referenz-Ordnungsspektrum (26) in einem nichtflüchtigen Speicher (27) abgelegt wird.
